# EUROPEAN PATENT APPLICATION

(11) **EP 4 585 434 A1**
(43) Date of publication of application: **16.07.2025**
(21) Application number: 22960203.2
(22) Date of filing: 30.09.2022
(51) Int. Cl.: B60H 1/00

(54) **AIR OUTLET, AIR OUTLET APPARATUS, AIR OUTLET DEVICE, AND VEHICLE**

(71) Applicant: Shenzhen Yinwang Intelligent Technologies Co., Ltd., Shenzhen, Guangdong 518129 (CN)
(72) Inventor: SHI, Hao, Shenzhen, Guangdong 518129 (CN); SUN, Jian, Shenzhen, Guangdong 518129 (CN); LIU, Dan, Shenzhen, Guangdong 518129 (CN); DING, Zhenwen, Shenzhen, Guangdong 518129 (CN)
(74) Representative: Thun, Clemens
(86) International application number: PCT/CN2022/122996
(87) International publication number: WO 2024/065571

(57) **Abstract**

An air exhaust vent, an air exhaust apparatus, an air exhaust device, and a transportation means are provided, to reduce difficulty in manufacturing and arranging the air exhaust vent on the basis of ensuring an air exhaust volume of the air exhaust vent. The air exhaust vent in embodiments of this application includes a first mechanical part and a second mechanical part. The first mechanical part and the second mechanical part form a cavity communicating with an air duct, and the air exhaust vent blows air from the air duct through the cavity. The first mechanical part includes a guide part, the second mechanical part includes a first surface, and the guide part is configured to guide air flowing in a first direction to flow in a second direction. The first direction is a direction in which the air flows out of the cavity, and the second direction is a direction along the first surface. The air exhaust vent formed by the two mechanical parts is not only simple in structure, attractive in appearance, and easy to arrange, but also discharges the air through the cavity to drive a surrounding air flow based on the Bernoulli's principle and the Coanda effect, to achieve an effect that an air exhaust volume is greater than an air intake volume.

## Description

### TECHNICAL FIELD

This application relates to the field of mechatronics, and specifically, to an air exhaust vent, an air exhaust apparatus, an air exhaust device, and a transportation means.

### BACKGROUND

With development of science and technology, people put forward higher requirements for adjustment of their own environment, and widely use air conditioners, air purifiers, and other adjustment apparatuses.

The foregoing adjustment apparatuses all implement environment adjustment in a form of air supply. Therefore, the foregoing adjustment apparatuses each are provided with an air exhaust vent. For example, as an output end of an air conditioner of a vehicle, an air exhaust vent in the vehicle is configured to adjust an air volume and an air direction, to implement requirements for air circulation and temperature control of the interior of the vehicle, and provide a comfortable in-vehicle environment for a driver and a passenger.

However, to achieve a large air exhaust volume, an existing air exhaust vent has a large size, which is not only unattractive in appearance, but also very difficult to manufacture and arrange.

### SUMMARY

Embodiments of this application provide an air exhaust vent, to reduce difficulty in manufacturing and arranging the air exhaust vent on the basis of ensuring an air exhaust volume of the air exhaust vent. Embodiments of this application further provide a corresponding air exhaust apparatus, air exhaust device, and transportation means.

According to a first aspect, this application provides an air exhaust vent, including a first mechanical part and a second mechanical part, where the first mechanical part and the second mechanical part form a cavity communicating with an air duct, and the air exhaust vent blows air from the air duct through the cavity; and the first mechanical part includes a guide part, the second mechanical part includes a first surface, the guide part is configured to guide air flowing in a first direction to flow in a second direction, the first direction is a direction in which the air flows out of the cavity, and the second direction is a direction along the first surface.

In this application, the first mechanical part and the second mechanical part form the cavity (a gap), the cavity communicates with the air duct, and the air (an air flow) from the air duct flows into the cavity and then flows out of the cavity, to complete blowing of the air.

In this application, based on the Bernoulli's principle, a flow speed (kinetic energy) of the air flowing out of the cavity is high, and pressure of the air is small at a position with a same height (with same gravity potential energy), so that surrounding air with the same height can be driven to flow together, to increase an overall air exhaust volume.

In this application, the guide part on the first mechanical part is configured to guide the air flowing in the first direction to flow in the second direction. The first direction is the direction in which the air flows out of the cavity, and the second direction is the direction along the first surface. To be specific, when the air flows out of the cavity from the guide part, the air flows in the first direction; and based on the Coanda effect, the air deviates from an original flow direction (the first direction), to flow in a direction (the second direction) of a protruding object surface (the first surface). Therefore, the direction along the first surface can be set or adjusted based on a requirement of a user, to adjust a direction in which the air flows out.

According to the first aspect, the air exhaust vent includes the first mechanical part and the second mechanical part, the first mechanical part and the second mechanical part form the cavity communicating with the air duct, and the air exhaust vent blows the air from the air duct through the cavity. The first mechanical part includes the guide part, the second mechanical part includes the first surface, and the guide part is configured to guide the air flowing in the first direction to flow in the second direction. The first direction is the direction in which the air flows out of the cavity, and the second direction is the direction along the first surface. The air exhaust vent formed by the two mechanical parts is not only simple in structure, attractive in appearance, and easy to arrange, but also discharges the air through the cavity to drive a surrounding air flow based on the Bernoulli's principle and the Coanda effect, to achieve an effect that an air exhaust volume is greater than an air intake volume.

In a possible implementation of the first aspect, the air exhaust vent further includes a first control part, and the first control part is configured to control the guide part to adjust the first direction and a width of the cavity.

In this possible implementation, the first control part may adjust the first direction and the width of the cavity, that is, change an air exhaust direction and an air exhaust volume of the air exhaust vent, to improve user experience.

In a possible implementation of the first aspect, the air exhaust vent further includes a second control part, and the second control part is configured to control the second mechanical part to adjust the second direction and the width of the cavity.

In this possible implementation, the second control part may adjust the second direction and the width of the cavity, that is, change the air exhaust direction and the air exhaust volume of the air exhaust vent, to improve user experience.

In a possible implementation of the first aspect, the second mechanical part includes a first part used to form the cavity and a second part located outside the cavity, the second control part is configured to control the first part to adjust the width of the cavity, and the second control part is further configured to control the second part to adjust the second direction.

In this possible implementation, the second mechanical part may separately adjust the first part and the second part of the second mechanical part, that is, separately adjust the air exhaust direction and the air exhaust volume of the air exhaust vent, to further improve user experience.

In a possible implementation of the first aspect, an angle formed by the first direction and the second direction is less than 90 degrees.

In this possible implementation, the angle formed by the first direction and the second direction is less than 90 degrees, to ensure applicability of the Coanda effect to the air exhaust vent, and improve implementability of the solution.

In a possible implementation of the first aspect, the width of the cavity is less than or equal to 30 millimeters.

In this possible implementation, the width of the cavity is less than or equal to 30 millimeters, to ensure applicability of the Bernoulli' s principle to the air exhaust vent, and improve implementability of the solution.

According to a second aspect, this application provides an air exhaust apparatus, where the air exhaust apparatus includes an air duct and the air exhaust vent according to the first aspect or any possible implementation of the first aspect.

In this application, the air exhaust apparatus may be used in a tool, for example, a vehicle, on which the air duct and the air exhaust vent need to be disposed.

The second aspect has a same beneficial effect as that in the first aspect or any possible implementation of the first aspect.

In a possible implementation of the second aspect, the air exhaust apparatus further includes a ceiling structure, and the air exhaust vent is installed on the ceiling structure.

In this possible implementation, the air exhaust vent provided in this application is installed on the ceiling structure, and compared with a conventional air exhaust vent installed on a ceiling in a vehicle, the air exhaust vent provided in this application resolves problems that the air exhaust vent is difficult to arrange, is unattractive in appearance, and is easy to detach when a curtain airbag inflates.

In a possible implementation of the second aspect, the air exhaust vent and the ceiling structure are integrally formed.

In this possible implementation, the air exhaust vent and the ceiling structure may be produced at the same time and integrally formed, to reduce production costs of the air exhaust apparatus, improve production efficiency of a supply chain, and improve implementability of the solution.

In a possible implementation of the second aspect, the air exhaust vent and the air duct are integrally formed.

In this possible implementation, the air exhaust vent and the air duct may be produced at the same time and integrally formed, or the air exhaust vent, the air duct, and the ceiling structure may be produced at the same time and integrally formed, to reduce the production costs of the air exhaust apparatus, improve the production efficiency of the supply chain, and improve the implementability of the solution.

In a possible implementation of the second aspect, a shape of the air exhaust apparatus is any one of a ring shape, a U shape, or a straight-line shape.

In this possible implementation, when the shape of the air exhaust apparatus is any one of the ring shape, the U shape, or the straight-line shape, wide-area coverage of the air exhaust vent may be implemented, to resolve a problem of uncomfortable experience caused by single-point air exhaust temperature and air volume concentration, and improve user experience.

In a possible implementation of the second aspect, the air duct is connected to at least one of an air humidifier, an air purifier, and a freshener.

In this possible implementation, the air duct may be connected to different apparatuses based on user requirements, so that the air exhaust vent blows different air flows. This extends function diversity of the air exhaust vent.

According to a third aspect, this application provides an air exhaust device. The air exhaust device includes the air exhaust vent according to the first aspect or any possible implementation of the first aspect.

In this application, the air exhaust device may be a device on which the air exhaust vent needs to be disposed.

The third aspect has a same beneficial effect as that in the first aspect or any possible implementation of the first aspect.

In a possible implementation of the third aspect, the air exhaust device is an air conditioner or an air purifier.

In this possible implementation, when the air exhaust device is the air conditioner or the air purifier, because the air exhaust vent has a simple structure, production costs and production difficulty of the air conditioner or the air purifier are reduced. In addition, because the width of the cavity of the air exhaust vent provided in this application is small, when the air exhaust vent is used in the foregoing furniture appliances, the structure of the air exhaust vent is easy to hide, and the appearance is more attractive. In addition, effects such as discharged air softness and temperature evenness can be implemented based on structural features of the air exhaust vent.

According to a fourth aspect, this application provides a transportation means, where the transportation means includes the air exhaust apparatus according to the second aspect or any possible implementation of the second aspect.

In this application, the transportation means may be a tool on which an air duct and an air exhaust vent need to be disposed.

The fourth aspect has a same beneficial effect as that in the second aspect or any possible implementation of the second aspect.

In a possible implementation of the fourth aspect, the transportation means is a vehicle.

In this possible implementation, the transportation means may be specifically the vehicle, to improve implementability of the solution.

In embodiments of this application, an air exhaust vent includes a first mechanical part and a second mechanical part. The first mechanical part and the second mechanical part form a cavity communicating with an air duct, and the air exhaust vent blows air from the air duct through the cavity. The first mechanical part includes a guide part, the second mechanical part includes a first surface, and the guide part is configured to guide air flowing in a first direction to flow in a second direction. The first direction is a direction in which the air flows out of the cavity, and the second direction is a direction along the first surface. The air exhaust vent formed by the two mechanical parts is not only simple in structure, attractive in appearance, and easy to arrange, but also discharges the air through the cavity to drive a surrounding air flow based on the Bernoulli's principle and the Coanda effect, to achieve an effect that an air exhaust volume is greater than an air intake volume.

### BRIEF DESCRIPTION OF DRAWINGS

FIG. 1 is a diagram of the Coanda effect;
FIG. 2 is a diagram of the Bernoulli' s principle;
FIG. 3 is a diagram of a vehicle interior;
FIG. 4A is a diagram of a structure of a vehicle ceiling;
FIG. 4B is a diagram of a cross-sectional structure of a vehicle ceiling;
FIG. 5 is a diagram of an embodiment of an air exhaust vent according to an embodiment of this application;
FIG. 6 is a diagram of another embodiment of an air exhaust vent according to an embodiment of this application;
FIG. 7 is a diagram of another embodiment of an air exhaust vent according to an embodiment of this application;
FIG. 8A is a diagram of an embodiment of an air exhaust device according to an embodiment of this application;
FIG. 8B is a diagram of another embodiment of an air exhaust device according to an embodiment of this application;
FIG. 9 is a diagram of an embodiment of an air exhaust apparatus according to an embodiment of this application;
FIG. 10 is a diagram of another embodiment of an air exhaust apparatus according to an embodiment of this application;
FIG. 11 is a diagram of another embodiment of an air exhaust apparatus according to an embodiment of this application;
FIG. 12A to FIG. 12C are diagrams of another embodiment of an air exhaust apparatus according to an embodiment of this application; and
FIG. 13 is a diagram of an embodiment of a transportation means according to an embodiment of this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the data termed in such a way are interchangeable in proper cases, so that embodiments described herein can be implemented in other orders than the order illustrated or described herein. In addition, terms "include" and "have" and any variants thereof are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

Embodiments of this application provide an air exhaust vent, to reduce difficulty in manufacturing and arranging the air exhaust vent on the basis of ensuring an air exhaust volume of the air exhaust vent. Embodiments of this application further provide a corresponding air exhaust apparatus, air exhaust device, and transportation means. Details are separately described in the following.

The following explains and describes terms and concepts in embodiments of this application.

### (1) Coanda effect

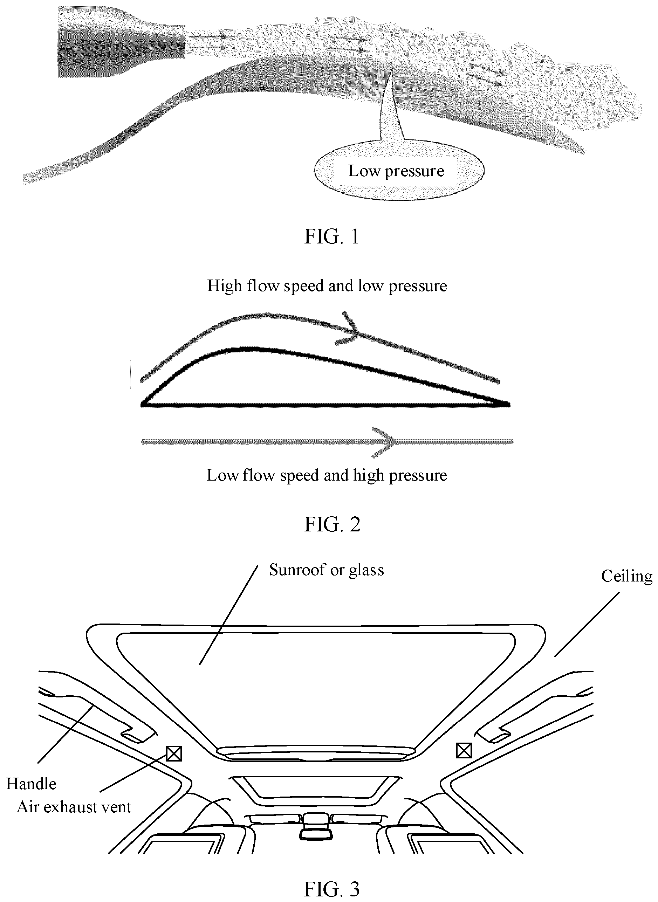

As shown in FIG. 1, the Coanda effect is the tendency in which a fluid (a water flow or an air flow) deviates from an original flow direction, to flow along a protruding object surface. When surface friction (which may also be referred to as fluid viscosity) exists between the fluid and the object surface along which the fluid flows, the fluid flows along the object surface as long as a curvature is small. For example, as shown in FIG. 1, air flows along a curved wall.

### (2) Bernoulli's principle

As shown in FIG. 2, the Bernoulli' s principle is essentially the conservation of mechanical energy in a fluid. In brief, kinetic energy + gravity potential energy + pressure potential energy = constant. In addition, there is a well-known inference: When the fluid flows at a same height, a higher flow speed indicates a lower pressure.

The following uses an example to describe an application scenario in embodiments of this application.

With development of science and technology, people put forward higher requirements for adjustment of their own environment, and widely use air conditioners, air purifiers, and other environment adjustment apparatuses. These adjustment apparatuses all implement environment adjustment in a form of air supply. Therefore, the foregoing adjustment apparatuses each are provided with an air exhaust vent. For example, a central air conditioner disposed above a room discharges, through an air exhaust vent, air for a user from above. However, most air exhaust vents are large in size, so that the air exhaust vents are difficult to manufacture and arrange and are unattractive in appearance. Therefore, how to optimize the air exhaust vent becomes an urgent problem to be resolved currently.

Specifically, an application scenario of a vehicle is used as an example. As shown in FIG. 3, in addition to disposing air exhaust vents on a conventional dashboard and behind a central console handrail, an air exhaust vent may be further additionally provided at a rear-row position of a ceiling of the vehicle to discharge air for a passenger in a rear row from above, to further improve experience of the passenger in the rear row (a second row, a third row, or the like of the vehicle).

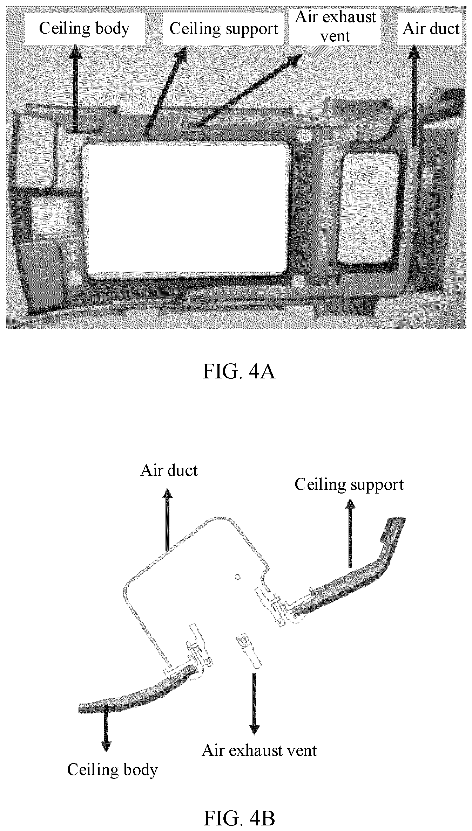

As shown in FIG. 4A and FIG. 4B, the ceiling usually includes a ceiling body, a ceiling support, and ceiling accessories. The air exhaust vent usually includes a tab, fins, a connecting rod, a housing, and the like, is installed on the ceiling, and is connected to an air duct. The user adjusts an air direction up, down, left, and right through the tab. One end of the air duct is usually connected to the air exhaust vent, and the other end is connected to an air conditioner of the vehicle. In addition, the air exhaust vent may be further disposed on a peripheral structure of the ceiling, for example, top cover sheet metal, or glass of a sunroof or a panoramic glass roof.

However, for the passenger, because the air exhaust vent is arranged at a high position, it is inconvenient to adjust the air exhaust vent by lifting the hand. The air exhaust vent can only discharge air at a single point from a specified position, and in this case, the position and an angle are limited, and a temperature change and a wind speed are centralized. As a result, local somatosensory experience is too intensive and uneven (for example, the air exhaust vent blows the air to the head, and consequently, for the head, a local wind speed is high, a temperature is low, and the passenger feels uncomfortable). In addition, components such as the air exhaust vent, a handle, a reading light, and a speaker are arranged on the ceiling of the vehicle in a concentrated manner, and consequently, the appearance is disorder and unattractive. Moreover, in summer, when the vehicle is exposed to sunlight, the user gets on the vehicle, opens a window, and turns on the air conditioner, but due to single-point air exhaust, air convection is slow, hot air dissipates slowly, and heat decreases slowly.

For a vehicle manufacturer, the components such as the air exhaust vent, the handle, the reading light, the speaker, the air duct, and a curtain airbag are arranged in the rear row of the vehicle in a concentrated manner, and consequently, it is difficult to arrange. In addition, the air exhaust vent is arranged near the curtain airbag, and consequently, there is a safety risk that the air exhaust vent will fly out and hurt people when the curtain airbag inflates.

The following describes in detail, with reference to the foregoing application scenario, the air exhaust vent, the air exhaust apparatus, the air exhaust device, and the transportation means provided in embodiments of this application.

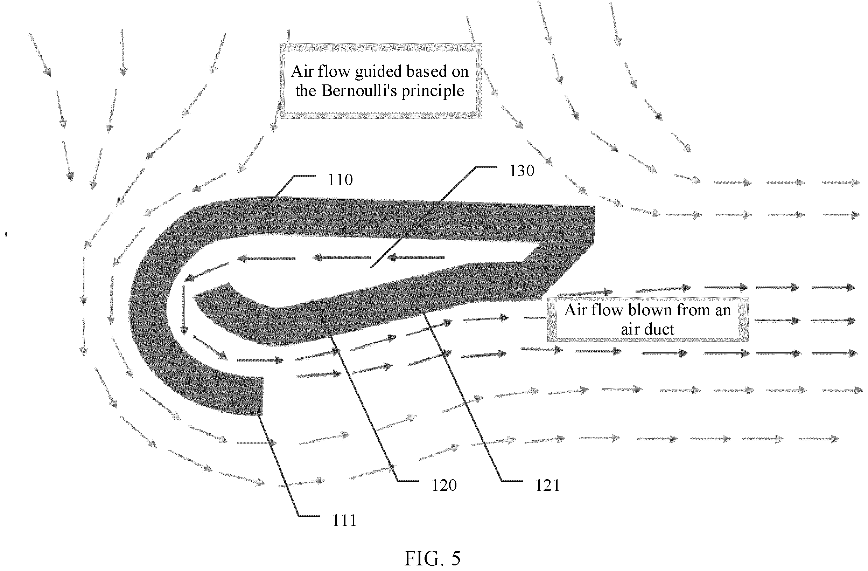

As shown in FIG. 5, an embodiment of the air exhaust vent provided in embodiments of this application includes a first mechanical part 110 and a second mechanical part 120.

The first mechanical part 110 and the second mechanical part 120 form a cavity 130 communicating with an air duct (which is not shown in the figure, where it should be understood that the air duct may communicate with any position of the air exhaust vent). The air exhaust vent blows air from the air duct through the cavity 130. The first mechanical part 110 includes a guide part 111, the second mechanical part 120 includes a first surface 121, the guide part 111 is configured to guide air flowing in a first direction to flow in a second direction, the first direction is a direction in which the air flows out of the cavity, and the second direction is a direction along the first surface.

Specifically, the first mechanical part and the second mechanical part form the cavity (a gap), the cavity communicates with the air duct, and the air (an air flow, for example, a gas flow) from the air duct flows into the cavity and then flows out of the cavity, to complete blowing of the air.

Refer to the Bernoulli' s principle shown in FIG. 2. A flow speed (kinetic energy) of the air flowing out of the cavity is high, and pressure of the air is small at a position with a same height (with same gravity potential energy), so that surrounding air with the same height can be driven to flow together, to increase an overall air exhaust volume.

Optionally, to ensure applicability of the Bernoulli' s principle to the air exhaust vent provided in embodiments of this application, a width of the cavity is less than or equal to 30 millimeters.

Further, the guide part on the first mechanical part is configured to guide the air flowing in the first direction to flow in the second direction. The first direction is the direction in which the air flows out of the cavity, and the second direction is the direction along the first surface. To be specific, when the air flows out of the cavity from the guide part, the air flows in the first direction; refer to the Coanda effect shown in FIG. 1; and the air deviates from an original flow direction (the first direction) to flow in a direction (the second direction) of a protruding object surface (the first surface). Therefore, the direction along the first surface can be set or adjusted based on a requirement of a user, to adjust a direction in which the air flows out.

Optionally, to ensure applicability of the Coanda effect to the air exhaust vent provided in embodiments of this application, an angle formed by the first direction and the second direction is an acute angle, and less than 90 degrees.

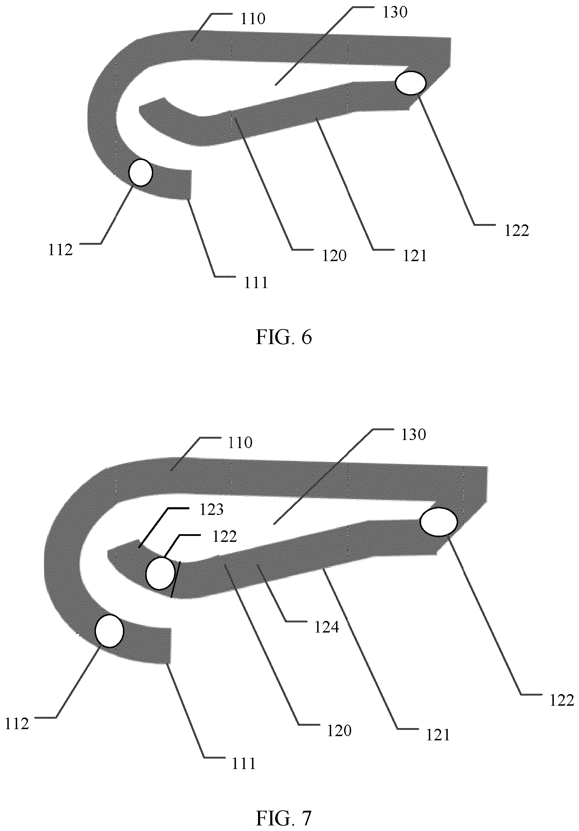

Optionally, as shown in FIG. 6, the air exhaust vent further includes a first control part 112 and a second control part 122. The first control part 112 is configured to control the guide part 111 to adjust the first direction and the width of the cavity 130, and the second control part 122 is configured to control the second mechanical part 120 to adjust the second direction and the width of the cavity 130.

Specifically, the first control part and the second control part may be electrically connected to a control unit in a device in which the first control part and the second control part are integrated. For example, in the vehicle, the first control part and the second control part are connected to a control system of the vehicle, for example, a micro controller unit (micro controller unit, MCU). The user may control the first control part and the second control part through a control panel in the vehicle, to change the width of the cavity, the first direction, and/or the second direction.

It should be understood that, because the first control part and the second control part may respectively control the first mechanical part and the second mechanical part to move, the first mechanical part and the second mechanical part may be made of a flexible soft material. Alternatively, the first mechanical part is divided into two parts, the two parts are connected by the first control part, and the first control part may move, so that an angle is generated between the two parts. This is the same for the second mechanical part and the second control part.

It should be understood that the width of the cavity may change in the entire cavity. The width of the cavity in embodiments of this application is a width of the cavity at an end point, that is, a width of the cavity at a position at which the air flows out of the cavity.

The first control part is disposed on the first mechanical part, and the first control part may specifically control the guide part on the first mechanical part. Because the first direction in which the air flows out of the cavity is determined by a direction of the guide part, the first control part may adjust the first direction by controlling the movement of the guide part. In addition, when the direction of the guide part is adjusted, the width of the cavity also changes accordingly, so that the air exhaust volume of the air exhaust vent is adjusted.

Similarly, the second control part is disposed on the second mechanical part, and the second control part may specifically control the second mechanical part to move to adjust the second direction. When a direction of the first surface of the second mechanical part is adjusted, the width of the cavity also changes accordingly, so that the air exhaust volume of the air exhaust vent is adjusted.

Optionally, as shown in FIG. 7, the second mechanical part 120 includes a first part 123 used to form the cavity 130 and a second part 124 located outside the cavity 130. The second control part 122 is configured to control the first part 123 to adjust the width of the cavity 130. The second control part 122 is further configured to control the second part 124 to adjust the second direction.

The first part is a part that forms the cavity and that is in the second mechanical part, and the second part is a part that is outside the cavity and that is in the second mechanical part. It can be seen from FIG. 7 that when the second control part controls movement of the first part, the air has not flowed out of the cavity. Therefore, in this case, only the width of the cavity is changed, in other words, the air exhaust volume of the air exhaust vent is changed. When the second control part controls movement of the second part, the air has flowed out of the cavity. In this case, the air flows along the first surface of the second part based on the Coanda effect. When the second control part controls the direction of the first surface of the second part to change, a subsequent outflow direction of the air also changes accordingly.

It can be learned from the foregoing embodiments that the air exhaust vent provided in embodiments of this application may bring the following three beneficial effects, including but not limited to:
(1) The air exhaust vent formed by the two mechanical parts is not only simple in structure, but also attractive in appearance and easy to arrange.
(2) Based on the Bernoulli' s principle and the Coanda effect, the air is discharged through the cavity to drive a surrounding air flow, to achieve an effect that an air exhaust volume is greater than an air intake volume.
(3) The control part adjusts the first direction, the second direction, and the width of the cavity, so that the air exhaust direction and the air exhaust volume of the air exhaust vent are adjustable, to improve user experience.

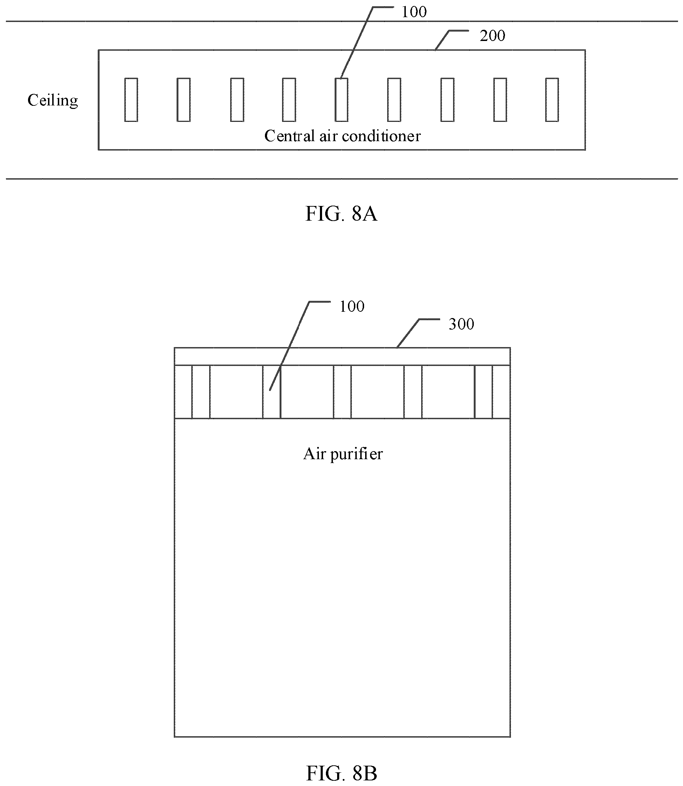

As shown in FIG. 8A and FIG. 8B, an embodiment of the air exhaust device provided in embodiments of this application includes an air exhaust vent 100. The air exhaust vent 100 may be the air exhaust vent shown in FIG. 5 to FIG. 7 described in the foregoing embodiments.

Specifically, the air exhaust device may be a furniture electrical device, for example, an air conditioner 200 shown in FIG. 8A, specifically a central air conditioner, or may be an air purifier 300 shown in FIG. 8B.

In embodiments of this application, when the air exhaust vent shown in FIG. 5 to FIG. 7 is disposed on the air conditioner or the air purifier, because the air exhaust vent has a simple structure, production costs and production difficulty of the air conditioner or the air purifier are reduced. In addition, because the width of the cavity of the air exhaust vent provided in this application is small, when the air exhaust vent is used in the foregoing furniture appliances, the structure of the air exhaust vent is easy to hide, and the appearance is more attractive. In addition, effects such as discharged air softness and temperature evenness can be implemented based on structural features of the air exhaust vent.

The air exhaust device provided in this embodiment of this application has a same implementation and beneficial effects as the foregoing air exhaust vent. Details are not described in this embodiment of this application again.

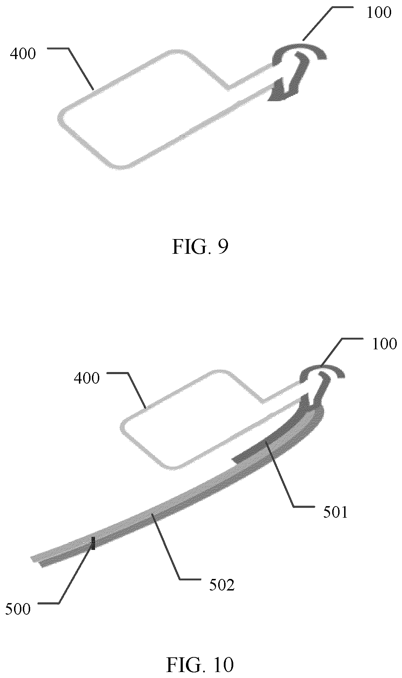

As shown in FIG. 9, an embodiment of the air exhaust apparatus provided in embodiments of this application includes an air duct 400 and the air exhaust vent 100 shown in FIG. 5 to FIG. 7 described in the foregoing embodiments.

Specifically, the air exhaust apparatus provided in embodiments of this application may be used in a transportation means, for example, a vehicle. As shown in FIG. 10, the air exhaust apparatus further includes a ceiling structure 500. The ceiling structure 500 may be a ceiling structure that needs to be installed in the vehicle. The ceiling structure 500 includes a ceiling support 501 and a ceiling body 502. The air exhaust vent 100 is installed on the ceiling structure 500, and may be specifically installed on the ceiling support 501 of the ceiling structure 500, the air exhaust vent 100 is further connected to the air duct 400, one end of the air duct 400 is connected to the air exhaust vent 100, and the other end is connected to an air conditioner of the vehicle.

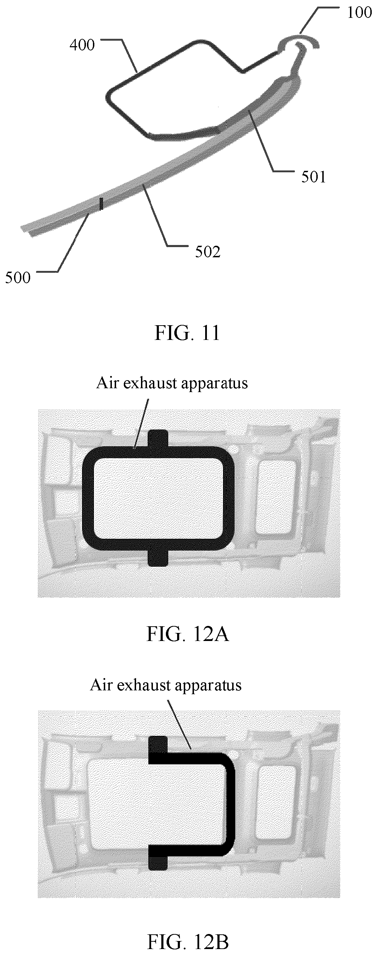

Optionally, when the air exhaust vent is installed on the ceiling structure, and when the air exhaust apparatus is manufactured, the air exhaust vent, the air duct, and the ceiling structure may be separately produced and then integrated in a secondary installation manner. For example, after the air exhaust vent is separately disassembled, the air exhaust vent is integrated in a secondary installation manner with the ceiling support, the ceiling body, sunroof glass, a fixed glass sunroof or top cover sheet metal, and the air duct. The installation manner may be clamping, welding, screwing, glue, or the like. In addition, the air exhaust vent and the ceiling structure may be integrally formed, or the air exhaust vent and the air duct may be integrally formed. As shown in FIG. 11, the air exhaust vent 100, the air duct 400, and the ceiling structure 500 may alternatively be integrally formed. Specifically, the air exhaust vent 100, the air duct 400, and the ceiling support 501 are integrally formed, and the ceiling support 501 and the ceiling body 502 are integrally formed. Through integration of a plurality of components and mechanical parts, production costs of the air exhaust apparatus are reduced, and production efficiency of a supply chain is improved.

For example, when the air exhaust vent and the ceiling structure are integrally formed, a closed ring-shaped structure is formed along a ceiling opening. In addition to supporting and reinforcing the ceiling and ensuring a contour and rigidity of the ceiling opening, the ceiling support may form a hollow structure inside a top support after the integration, to implement a function of the air duct or an airway. An air flow of an air duct of an air conditioner may be guided into the ring-shaped structure of the entire ceiling support, and the air exhaust vent blows the air flow in the hollow structure to an interior of a vehicle cockpit.

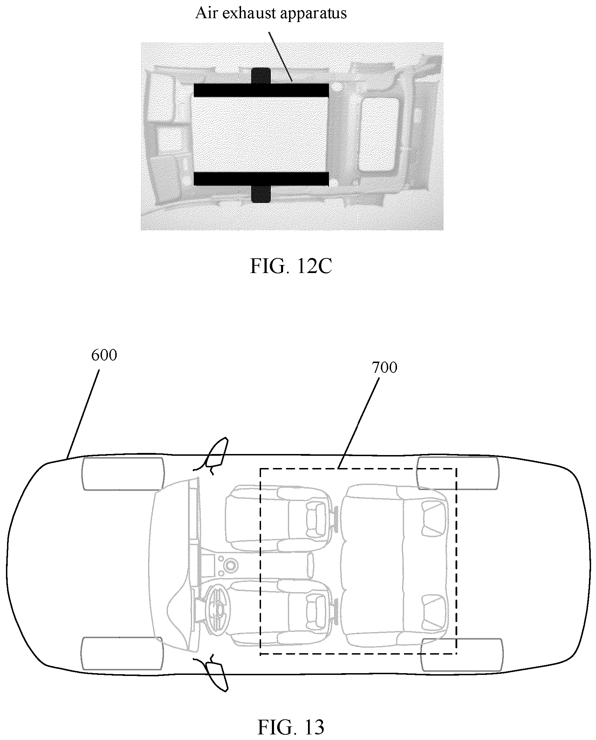

Optionally, as shown in FIG. 12A to FIG. 12C, a shape of the air exhaust apparatus is any one of a ring shape, a U shape, or a straight-line shape, that is, the shape is "-", "=", "U", or "square" shape. Air exhaust vents may be provided with a plurality of the foregoing shapes, to implement wide-area coverage of the air exhaust vents, resolve a problem of uncomfortable experience caused by single-point air exhaust temperature and air volume concentration, and improve user experience.

For example, corresponding to the foregoing implementation of integrating the air exhaust vent and the ceiling structure, a shape of the ceiling structure is any one of a ring shape, a U shape, or a straight-line shape. The air flow in the air duct flows into the hollow structure in the ceiling structure, and flows out through a plurality of air exhaust vents that are integrated with the hollow structure, for example, is blown to a plurality of positions inside the vehicle cockpit.

Optionally, the air duct may be further connected to another functional apparatus in the vehicle, for example, connected to at least one of an air humidifier, an air purifier, and a freshener, so that the air exhaust vent blows different air flows. This extends function diversity of the air exhaust vent.

The air exhaust apparatus provided in this embodiment of this application has a same implementation and beneficial effects as the foregoing air exhaust vent. Details are not described in this embodiment of this application again.

It can be learned from the foregoing embodiments that the air exhaust vent provided in embodiments of this application may bring the following four beneficial effects, including but not limited to:
(1) The air exhaust vent is used in an apparatus with the ceiling structure, to resolve problems that the air exhaust vent is difficult to arrange, is unattractive in appearance, and is easy to detach when a curtain airbag inflates.
(2) The air exhaust vent, the air duct, and the ceiling structure can be installed separately or integrally formed, to reduce production costs of the air exhaust apparatus, and improve production efficiency of a supply chain.
(3) When the air exhaust apparatus is in different shapes, wide-area coverage of the air exhaust vent may be implemented, to resolve a problem of uncomfortable experience caused by single-point air exhaust temperature and air volume concentration, and improve user experience.
(4) The air duct communicating with the air exhaust vent may be connected to different apparatuses based on user requirements, so that the air exhaust vent blows different air flows. This extends function diversity of the air exhaust vent.

As shown in FIG. 13, an embodiment of a transportation means 600 provided in embodiments of this application includes an air exhaust apparatus 700. The air exhaust apparatus 700 may be the air exhaust apparatus shown in FIG. 9 to FIG. 12C described in the foregoing embodiments. The transportation means 600 may be transportation such as a vehicle, a ship, an aircraft, or a train, and the air exhaust apparatus 700 is installed on the top of the transportation means 700.

Specifically, when the transportation means is the vehicle, an invisible (strip-shaped, 3-N-polygonal, or irregular) air exhaust apparatus may be specifically disposed at a position of a ceiling opening of the vehicle, a ceiling support, a ceiling body, sunroof glass, a fixed glass sunroof, or top cover sheet metal (or a beam/longitudinal beam).

The air exhaust vent or the air exhaust apparatus provided in embodiments of this application is disposed on the vehicle, so that a conventional air exhaust vent on the ceiling is removed, and a hidden air exhaust vent is newly added based on a ceiling sunroof opening. The air exhaust vent and the ceiling support may be designed as an integrated cavity component (through injection molding, stamping, or the like). The air exhaust vent is connected to the air duct of the entire vehicle through 1 to N (N is a positive integer) air intake channels. After entering the air exhaust vent through the air intake channels, the air flow of the air duct of the entire vehicle is blown out from an air exhaust cavity of the air exhaust vent. Based on the Bernoulli' s principle and the Coanda effect, the blown air flow drives the surrounding air to flow together, to form a wide-area and tender air and temperature flow in the vehicle cockpit.

In addition, the air exhaust vent does not need to be manually adjusted, and the air flow can form a natural circulation inside the cockpit. The air exhaust vent has a low-speed full-area air exhaust area and angle, and the temperature and the wind speed are uniform and imperceptible. Convection in the cockpit is quickly formed, and then quick temperature decrease or temperature rise are implemented. The appearance is hidden, simple, and high-end, and there is no inflation risk when the air exhaust vent is decoupled from the curtain airbag.

The transportation means provided in this embodiment of this application has a same implementation and beneficial effects as the foregoing air exhaust apparatus. Details are not described in this embodiment of this application again.

The transportation means in this application may include road transportation, water transportation, air transportation, an industrial device, an agricultural device, an entertainment device, or the like. For example, the transportation means may be a vehicle. The vehicle is a vehicle in a broad sense, and may be transportation (such as a commercial vehicle, a passenger vehicle, a motorcycle, a flight vehicle, or a train), an industrial vehicle (like a pallet truck, a trailer, or a tractor), an engineering vehicle (like an excavator, a bulldozer, or a crane), an agricultural device (like a lawn mower or a harvester), an entertainment device, or a toy vehicle. A type of the vehicle is not specifically limited in embodiments of this application. For another example, the transportation means may be transportation such as an aircraft or a ship.

In the several embodiments provided in this application, it should be understood that the disclosed structure may be implemented in other manners. For example, the described embodiment is merely an example. For example, division into the structures may be other division during actual implementation. For example, a plurality of units or components may be combined or integrated into another structure, or some features may be ignored. A part or all of the structures may be selected based on actual requirements to achieve the objectives of the solutions of embodiments.

The foregoing embodiments are merely intended for describing the technical solutions of this application, but not for limiting this application. Although this application is described in detail with reference to the foregoing embodiments, a person of ordinary skilled in the art should understand that modifications may still be made to the technical solutions described in the foregoing embodiments or equivalent replacements may be made to some technical features, and such modifications or replacements do not cause the essence of the corresponding technical solutions to depart from the scope of the technical solutions of embodiments of this application.

## Claims

1. An air exhaust vent, comprising a first mechanical part and a second mechanical part, wherein the first mechanical part and the second mechanical part form a cavity communicating with an air duct; and
the first mechanical part comprises a guide part, the second mechanical part comprises a first surface, the guide part is configured to guide air flowing in a first direction to flow in a second direction, the first direction is a direction in which the air flows out of the cavity, and the second direction is a direction along the first surface.

2. The air exhaust vent according to claim 1, wherein the air exhaust vent further comprises a first control part, and the first control part is configured to control the guide part to adjust the first direction and a width of the cavity.

3. The air exhaust vent according to claim 1 or 2, wherein the air exhaust vent further comprises a second control part, and the second control part is configured to control the second mechanical part to adjust the second direction and the width of the cavity.

4. The air exhaust vent according to claim 3, wherein the second mechanical part comprises a first part used to form the cavity and a second part located outside the cavity, the second control part is configured to control the first part to adjust the width of the cavity, and the second control part is further configured to control the second part to adjust the second direction.

5. The air exhaust vent according to any one of claims 1 to 4, wherein an angle formed by the first direction and the second direction is less than 90 degrees.

6. The air exhaust vent according to any one of claims 1 to 5, wherein the width of the cavity is less than or equal to 30 millimeters.

7. An air exhaust apparatus, comprising an air duct and the air exhaust vent according to any one of claims 1 to 6.

8. The air exhaust apparatus according to claim 7, wherein the air exhaust apparatus further comprises a ceiling structure, and the air exhaust vent is installed on the ceiling structure.

9. The air exhaust apparatus according to claim 8, wherein the air exhaust vent and the ceiling structure are integrally formed.

10. The air exhaust apparatus according to any one of claims 7 to 9, wherein the air exhaust vent and the air duct are integrally formed.

11. The air exhaust apparatus according to any one of claims 7 to 10, wherein a shape of the air exhaust apparatus is any one of a ring shape, a U shape, or a straight-line shape.

12. The air exhaust apparatus according to any one of claims 7 to 11, wherein the air duct is connected to at least one of an air humidifier, an air purifier, and a freshener.

13. An air exhaust device, comprising the air exhaust vent according to any one of claims 1 to 6.

14. The air exhaust device according to claim 13, wherein the air exhaust device is an air conditioner or an air purifier.

15. A transportation means, comprising the air exhaust apparatus according to any one of claims 7 to 12.

16. The transportation means according to claim 15, wherein the transportation means is a vehicle.
